(19) Europäisches Patentamt
European Patent Office
Office européen des brevets

(11) **EP 1 895 195 B1**

(12) **EUROPÄISCHE PATENTSCHRIFT**

(45) Veröffentlichungstag und Bekanntmachung des Hinweises auf die Patenterteilung:
**05.08.2009 Patentblatt 2009/32**

(51) Int Cl.:
***F16H 45/02*** *(2006.01)*

(21) Anmeldenummer: **07015851.4**

(22) Anmeldetag: **11.08.2007**

(54) **Hydrodynamische Kopplungsanordnung**

Hydrodynamic coupling device

Agencement d'accouplement hydrodynamique

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **01.09.2006 DE 102006041158**

(43) Veröffentlichungstag der Anmeldung:
**05.03.2008 Patentblatt 2008/10**

(73) Patentinhaber: **ZF Friedrichshafen AG 88038 Friedrichshafen (DE)**

(72) Erfinder:
• **Sueck, Gregor**
  **97526 Sennfeld (DE)**

• **So, Oliver**
  **97421 Schweinfurt (DE)**
• **Krüger, Thomas**
  **12683 Berlin (DE)**
• **Rössner, Monika**
  **97499 Donnersdorf (DE)**
• **Walter, Thomas**
  **97509 Kolitzheim (DE)**

(56) Entgegenhaltungen:
**WO-A-20/07054047          DE-A1- 2 553 884
DE-A1- 3 938 724**

## Beschreibung

Die Erfindung betrifft eine hydrodynamische Kopplungsanordnung gemäß dem Oberbegriff des Anspruches 1, und 2, wie sie aus der DE 3 938 724 A1 bekannt ist.

Bei der DE 39 38 724 A1 ragt jeweils eine als, umlaufender Ring ausgebildete Zusatzmasse in den Kupplungsraum, wobei durch die Zusatzmasse das Kupplungsvolumen (KV), bezogen auf ein das Kupplungsvolumen (KV) ebenso wie das Torusvolumen (TV) umfassendes Gesamtvolumen, reduziert ist. Die Zusatzmasse ist entweder am Torsionsschwingungsdämpfer oder am Turbinenrad befestigt.

Als weiterer Stand der Technik ist die DE-OS 25 53 884 bekannt, bei welcher ein Fluidkanal in den Innentorus ragt, wodurch das Torusvolumen (TV) reduziert wird. Zudem soll auf die WO 2007/054047 A2 verwiesen werden, die in Fig. 13 einen Torsionsschwingungsdämpfer zeigt, welcher durch eine Kapselung umschlossen ist, und dadurch das Kupplungsvolumen (KV) reduziert.

Eine hydrodynamische Kopplungsanordnung, die bspw. aus der DE 103 58 902 A1, Fig. 5, bekannt ist, dient zur Herstellung oder zur Aufhebung einer Wirkverbindung zwischen einem Antrieb, wie der Kurbelwelle einer Brennkraftmaschine, und einem Abtrieb, wie einer Getriebeeingangswelle, und ist mit einem um eine Drehachse rotierbaren Gehäuse ausgebildet. In der DE 103 58 902 A1 ist die Kopplungsanordnung als hydrodynamischer Drehmomentwandler ausgebildet, in welchem ein hydrodynamischer Kreis mit einem Pumpenrad, einem Turbinenrad und einem Leitrad vorgesehen ist, die gemeinsam ein von einem Torusraum umschlossenes Torusvolumen (TV) bilden. Darüber hinaus ist die hydrodynamische Kopplungsanordnung mit einer Überbrückungskupplung versehen, durch welche der hydrodynamische Kreis bei Momentenübertragungen vom Antrieb zum Abtrieb umgangen werden kann, wobei der Überbrückungskupplung ein Torsionsschwingungsdämpfer mit zwei Umfangsfedersätzen zur Dämpfung von Torsionsschwingungen zugeordnet ist. Die Überbrückungskupplung bildet gemeinsam mit dem Torsionsschwingungsdämpfer einen mechanischen Übertragungskreis, der innerhalb eines Kupplungsraumes des Gehäuses angeordnet ist, wobei sich durch diesen Kupplungsraum ein Kupplungsvolumen (KV) bestimmt.

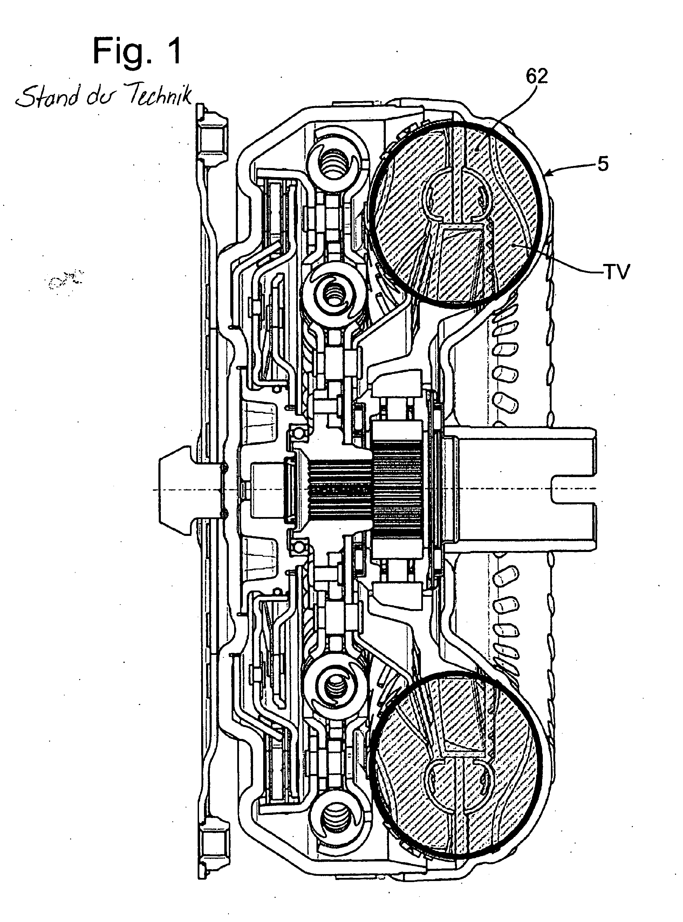

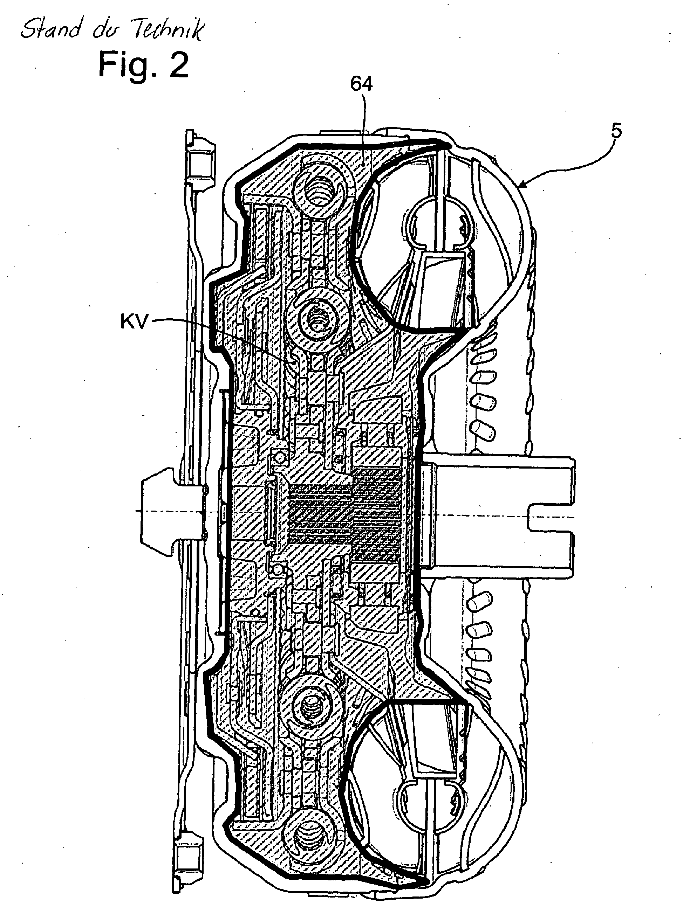

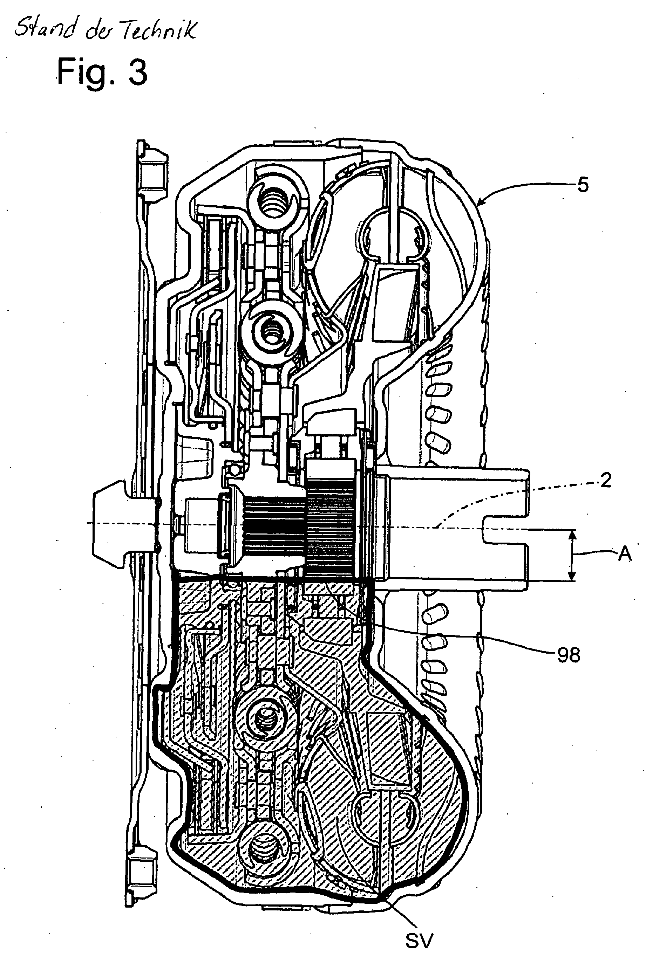

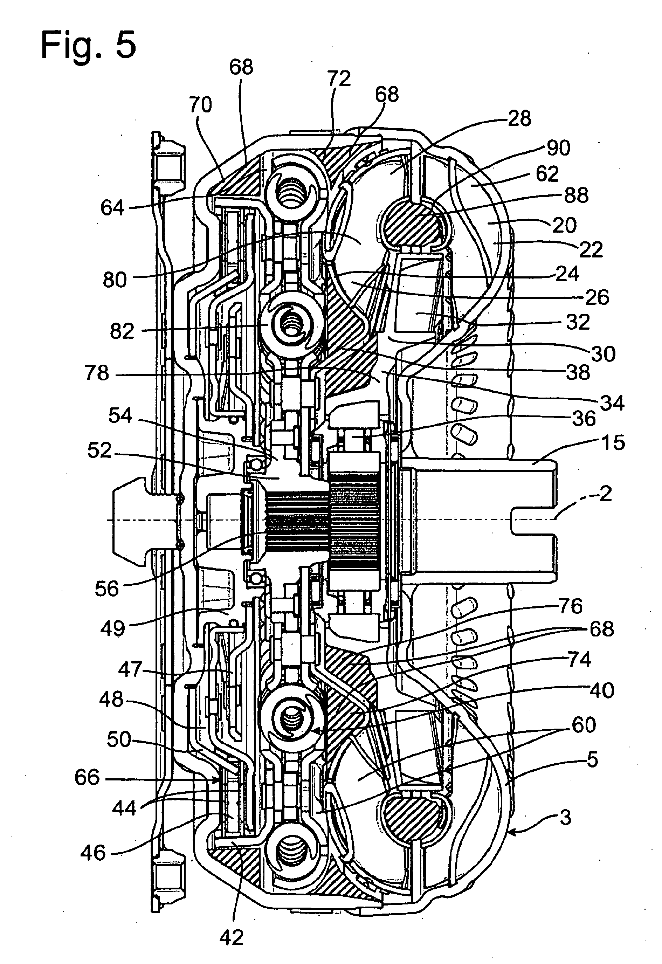

Der in der DE 103 58 902 A1, Fig. 5, gezeigte hydrodynamische Drehmomentwandler veranschaulicht eine bei hydrodynamischen Kopplungsanordnungen in jüngster Zeit häufig angewandte Entwicklungstendenz, wonach der Torusraum zugunsten eines kompakten Bauraums der Kopplungsanordnung über begrenzte Abmessungen verfügt. Gleichzeitig erfordern eine erhöhte Anzahl von Lamellen der Überbrückungskupplung zur Übertragung hoher Drehmomente sowie ein leistungsfähiger und daher komplexer Torsionsschwingungsdämpfer erheblichen Bauraum in der Kopplungsanordnung, so dass ein großer Kupplungsraum benötigt wird. Zugunsten einer anschaulicheren Darstellung der in einer hydrodynamischen Kopplungsanordnung relevanten Bauräume, durch welche die entsprechenden Volumina vorgegeben werden, sind der vorliegenden Beschreibung Figuren 1 bis 3 beigefügt, von denen Fig. 1 das Torusvolumen (TV) zeigt, Fig. 2 das Kupplungsvolumen (KV) und Fig. 3 ein Stillstandsvolumen (ST). Das Stillstandsvolumen (ST) stellt sich nach einer Mindeststillstandsphase ein, innerhalb der das in der hydrodynamischen Kopplungsanordnung befindliche Fluid zum einen schwerkraftbedingt in den unterhalb einer Drehachse liegenden Teil des Gehäuses absinkt, während ein anderer Teil des Fluids das Gehäuse über vorhandene Strömungswege verlassen hat.

Bei einem Neustart des die hydrodynamische Kopplungsanordnung aufnehmenden Kraftfahrzeugs verteilt sich das im Stillstandsvolumen (SV) enthaltene Fluid zunächst fliehkraftbedingt auf das Torusvolumen (TV) sowie auf das Kupplungsvolumen (KV), jedoch wird gleichzeitig aufgrund eines Überdruckes im Torusvolumen (TV) gegenüber dem Kupplungsvolumen (KV) zumindest ein Teil des im Torusvolumen (TV) verbliebenen Fluides in das Kupplungsvolumen (KV) gefördert. Dieses Problem wird durch Einlegen der Stufe Drive (D) im zugeordneten Getriebe weiter verstärkt, da hierdurch der Antrieb zunächst mit vorbestimmter Drehzahl wirksam ist, der Abtrieb und somit der Torsionsschwingungsdämpfer dagegen zumindest im wesentlichen noch im Stillstand verharren, was trotz anliegender Fliehkraft zu einem Absaugen von Fluid durch den Torsionsschwingungsdämpfer nach radial innen führt. Zwar wird während dieses Betriebszustandes bei Ausführung der hydrodynamischen Kopplungsanordnung als Zwei-Leitungs-System aus einer Fluidbevorratung frisches Fluid über die geöffnete Überbrückungskupplung in das Kupplungsvolumen (KV) eingeleitet, jedoch gelangt auch dieses Fluid zunächst nicht in das Torusvolumen (TV), sondern wird vielmehr ebenfalls nach radial innen abgesaugt, und verbleibt somit im Kupplungsraum. Diese Bedingungen äußern sich beim Anfahren des Fahrzeuges in einer Weise, dass das zumindest weitgehend entleerte Torusvolumen (TV) ebenso wie die geöffnete Überbrückungskupplung kaum zur Übertragung des vom Antrieb eingeleiteten Drehmomentes auf den Abtrieb befähigt ist. Einzig an der Überbrückungskupplung anliegende Schleppmomente vermögen eine Übertragung eines Restdrehmomentes sicher zu stellen. Erst mit langsam zunehmender, weiterer Befüllung des Kupplungsvolumens (KV) beginnt auch ein Übertritt frischen Fluids in den Toruskreis und damit eine Befüllung desselben. Eine derartige Leistungscharakteristik ist allerdings bei einem modernen Kraftfahrzeug nicht tolerierbar.

Der Erfindung liegt die Aufgabe zugrunde, eine hydrodynamische Kopplungsanordnung derart auszubilden, dass auch nach Ablauf einer Mindeststillstandszeit bei einem Neustart eine zufriedenstellend rasche Befüllung des Torusraums mit Fluid und damit eine hinreichende Drehmomentenübertragbarkeit sicher gestellt ist.

Diese Aufgabe wird durch die im Anspruch 1 oder Anspruch 2 angegebenen Merkmale gelöst. Hierbei wird eine Volumenreduzierung in den Kupplungsraum des Gehäuses der hydrodynamischen Kopplungsanordnung eingebracht und hierdurch eine Verringerung des Kupplungsvolumens (KV) erzielt. Auf diese Weise wird dafür gesorgt, dass derjenige Fluidvorrat, der sich nach Abschluss eines Betriebszustandes eines Antriebes eines die hydrodynamische Kopplungsanordnung aufnehmenden Kraftfahrzeuges im Verlauf einer sich an diesen Betriebszustand anschließenden Mindeststillstandsphase schwerkraftbedingt unter Bildung eines Stillstandsvolumens (SV) unterhalb einer Drehachse des Gehäuses abgesetzt hat, und bei einem Neustart des Antriebes fliehkraftbedingt innerhalb des Gehäuses für eine Verteilung bereit steht, nicht nur das verringerte Kupplungsvolumen (KV) beschleunigt aufzufüllen vermag, sondern darüber hinaus auch über Fluid für eine zumindest teilweise Befüllung des Torusraums zur Bereitstellung des für eine Übertragung von Drehmoment benötigten Torusvolumens (TV) verfügt. Damit steht bei einem Neustart unverzüglich genügend Fluid im Torusraum zur Verfügung, um eine befriedigende Drehmomentübertragung vom Antrieb, wie einer Kurbelwelle einer Brennkraftmaschine, zu einem Abtrieb, wie einer Getriebeeingangswelle, sicher zu stellen. Dies gilt auch dann, wenn beim Neustart unverzüglich in einem zugeordneten Getriebe die Stufe Drive (D) eingelegt wird, und somit ein Pumpenrad der hydrodynamischen Kopplungsvorrichtung mit der Drehzahl des Antriebs bewegt wird, der Abtrieb und damit ein im Kupplungsraum vorgesehener Torsionsschwingungsdämpfer dagegen noch im Stillstand verharren. Hierbei wird die Volumenreduzierung ein Absaugen von Fluid innerhalb des Kupplungsraums nach radial innen nicht vermeiden können, durch den hohen Befüllungsgrad des Kupplungsraums und gegebenenfalls des Torusraums mit Fluid besteht aber nicht das Risiko eines weitgehenden Auspumpens des Torusraumes.

Die Volumenreduzierung kann ein einzelnes Reduzierelement aufweisen, kann aber auch über eine Mehrzahl derartiger Reduzierelemente verfügen. Nach Anspruch 1 ist zumindest ein Teil dieser Reduzierelemente im radial äußeren Bereich des Kupplungsraumes, also an der radialen Außenwandung des Gehäuses der hydrodynamischen Kopplungsanordnung, vorgesehen, um von dort aus volumenverringernd in den Kupplungsraum zu ragen, und zwar in Bereiche desselben, die nicht von Bauteilen des mechanischen Übertragungskreises, wie Überbrückungskupplung oder Torsionsschwingungsdämpfer, ausgefüllt sind. Auf diese Weise kann mit geringem technischen Aufwand eine beträchtliche Volumenverringerung erzielt werden, wobei das jeweilige Reduzierungselement mit besonderem Vorzug zumindest im wesentlichen ringförmig ausgebildet sein kann. Durch entsprechende Materialauswahl bei diesen Reduzierelementen kann weiterhin vorteilhaft auf das Trägheitsverhalten der hydrodynamischen Kopplungsvorrichtung Einfluss genommen werden, indem Reduzierelemente aus schwerem Material, wie Metall, das Trägheitsmoment wesentlich erhöhen, Reduzierelemente aus leichterem Material, wie Kunststoff, sich dagegen nur unwesentlich auswirken. Ebenso besteht die Möglichkeit, ein Reduzierelement lediglich in den Kupplungsraum einzulegen, oder aber für eine axial- und/oder drehfeste Verbindung mit dem Gehäuse der Kupplungsanordnung zu sorgen.

Nach Anspruch 2 ist ein Reduzierelement der Volumenreduzierung vorzusehen durch Anbindung an ein dem Torusraum zugeordnetes Leitrad. Ebenso ist denkbar, einen im Kupplungsraum vorgesehenen Torsionsschwingungsdämpfer mit einer Kapselung zu versehen, und dadurch ein Eindringen von Fluid in den Torsionsschwingungsdämpfer zumindest im wesentlichen zu verhindern, wobei ein von Kapselung umschlossener Kapselraum auch deutlich größer als der Torsionsschwingungsdämpfer ausgebildet sein kann. Ziel dieser Maßnahme ist, das Kupplungsvolumen (KV) um das innerhalb der Kapselung befindliche Volumen des Torsionsschwingungsdämpfers zu verkleinern. Bei dieser Ausführung wäre also auch der Torsionsschwingungsdämpfer als Reduzierungselement der Volumenreduzierung wirksam. Dies gilt auch dann, wenn die Kapselung des Torsionsschwingungsdämpfers mit Schmierdurchgängen für im Kupplungsraum enthaltenes Fluid versehen ist, da Fluid über diese Schmierdurchgänge deutlich zeitverzögert gegenüber dem Neustart in den Kapselraum eindringen kann.

Der Torusraum dient zwar zur hydrodynamischen Übertragung von Drehmomenten, jedoch verbleibt innerhalb dieses Torusraumes ein diesbezüglich zumindest im wesentlichen nicht nutzbarer Bereich, nämlich der von Pumpen-, Turbinen- und Leitrad umschlossene Innentorusraum. Ist der Kupplungsraum bereits durch Reduzierungselemente einer Volumenreduzierung verringert, so kann dennoch durch Einsatz eines Reduzierungselementes in den Innentorusraum eine weitere Verringerung fluidaufnehmenden Raums innerhalb des Gehäuses der hydrodynamischen Kopplungsvorrichtung erzielt werden. Aber selbst für den Fall, dass aufgrund der konstruktiven Ausgestaltung des Kupplungsraums dieser keine Reduzierungselemente aufnehmen können sollte, besteht als Ausweichmöglichkeit immer noch die Möglichkeit, eine Verbesserung der Drehmomenten-Übertragungsfähigkeit nach einem Neustart herbei zu führen.

Im Folgenden wird ein Ausführungsbeispiel für die Erfindung angegeben, wobei in der Zeichnung durch die Figuren 1 bis 3 lediglich eine Darstellung relevanter Volumina erfolgt, und erst in Fig. 5 die erfindungsgemäße Volumenreduzierung dargestellt ist. Es zeigt im Einzelnen:

Fig. 1    eine hydrodynamische Kopplungsanordnung im Schnitt mit einem Torusraum und einem Kupplungsraum, wobei das vom Torusraum bestimmte Torusvolumen (TV) durch Schraffur hervorgehoben ist,

Fig. 2    wie Fig. 1, aber mit durch Schraffierung hervorgehobenem Kupplungsvolumen (KV) innerhalb eines Kupplungsraums,

Fig. 3    wie Fig. 1, aber mit durch Schraffierung hervorgehobenem Stillstandsvolumen (SV),

Fig. 4    einen Antriebsstrang mit der hydrodynamischen Kopplungsanordnung in schematischer Darstellung,

Fig. 5    wie Fig. 1, aber mit Darstellung von im Kupplungsraum sowie im Torusraum angeordneten Reduzierelementen einer Volumenreduzierung,

Fig. 6    Darstellung eines mit einer als Reduzierelement einer Volumenreduzierung dienenden Kapselung für einen Torsionsschwingungdämpfer.

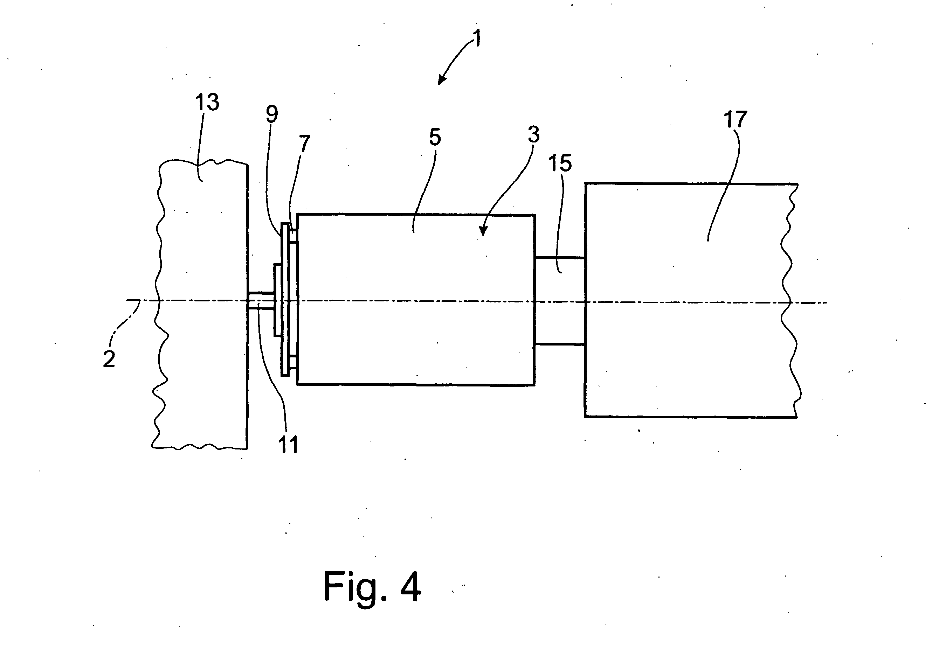

In Fig. 4 ist ein Antriebsstrang 1 mit einer eine Drehachse 2 aufweisenden hydrodynamischen Kopplungsanordnung 3 schematisch dargestellt. Die Kopplungsanordnung 3 umfasst ein Gehäuse 5, das über eine Mehrzahl von Befestigungsorganen 7 und ein Kopplungselement 9, wie z.B. eine Flexplatte, mit einem Antrieb 11, beispielsweise der Kurbelwelle einer Brennkraftmaschine 13, zur gemeinsamen Drehung gekoppelt werden kann. An der vom Antrieb 11 entfernt liegenden Axialseite weist das Gehäuse 5 eine Gehäusenabe 15 auf, die beispielsweise in eine Getriebeanordnung 17 eingreift und dort eine nicht gezeigte Fluidförderpumpe zur Drehung antreibt, die zur Versorgung des Gehäuses 5 mit Fluid dient. Zur Gehäusenabe 15 konzentrisch angeordnet ist ein nicht gezeigter Abtrieb in Form einer Getriebeeingangswelle, die mit ihrem freien Ende in das Gehäuse 5 ragt.

Wie Fig. 5 im einzelnen zeigt, dient die vom Antrieb 11 abgewandte Seite des Gehäuses 5 durch Aufnahme einer Pumpenbeschaufelung 20 als Pumpenrad 22, während eine Turbinenschale 24 durch Aufnahme einer Turbinenbeschaufelung 26 ein Turbinenrad 28 bildet, das zwischen sich und dem Pumpenrad 22 eine Leitradbeschaufelung 32 eines Leitrades 30 aufnimmt, dessen Leitradnabe 34 auf einem Freilauf 36 positioniert ist. Dieser sitzt seinerseits in aus der eingangs zitierten DE 103 58 902 A1 bekannter Weise auf der als Abtrieb dienenden Getriebeeingangswelle.

Das Pumpenrad 22 bildet gemeinsam mit dem Turbinenrad 28 und dem Leitrad 30 im Erstreckungsbereich der jeweiligen Beschaufelung 20, 26 und 32 einen Torusraum 62, der zumindest im wesentlichen ein Torusvolumen (TV) umschließt, wie es in Fig. 1 durch Schraffierung hervorgehoben ist.

Zurückkommend auf das Turbinenrad 28, greift dieses über eine Turbinennabe 38 an einem Torsionsschwingungsdämpfer 40 an, der über einen Eingangsteil 42 drehfest mit radial äußeren Lamellen 44 einer Überbrückungskupplung 45 verbunden ist. Axial zwischen diesen Lamellen 44 ist eine radial innere Lamelle 46 angeordnet, die über eine Drehsicherung 50 mit einem antriebsseitigen Gehäusedeckel 51 des Gehäuses 5 drehfest ist. Zwischen den Lamellen 44 und 46 ist zur Übertragung eines Drehmomentes vom Gehäuse 5 auf den Abtrieb eine Wirkverbindung herstellbar, indem ein auf einer Deckelnabe 49 des Deckels 51 axial verlagerbarer Kolbens 47 in Richtung zum Gehäusedeckel 51 verlagert wird, was durch einen Überdruck in einem hydrodynamischen Kreis 60 an der vom Gehäusedeckel 51 abgewandten Seite des Kolbens 47 gegenüber einer Druckkammer 48 erfolgt, die sich axial zwischen dem Gehäusedeckel 51 und dem Kolben 47 befindet. Sobald durch den Kolben 47 die Wirkverbindung zwischen den Lamellen 44 und 46 untereinander sowie gegenüber dem Gehäusedeckel 51 hergestellt ist, befindet sich die Überbrückungskupplung 45 in ihrer Einrückstellung. Umgekehrt wird die Überbrückungskupplung 45 in ihre Ausrückstellung bewegt, wenn in der Druckkammer 48 gegenüber dem hydrodynamischen Kreis 60 ein Überdruck aufgebaut ist.

Die Überbrückungskupplung 45, die gemeinsam mit dem Torsionsschwingungsdämpfer 40 einen mechanischen Übertragungskreis 66 bildet, ist gemeinsam mit dem Torsionschwingungsdämpfer 40 in einem Kupplungsraum 64 untergebracht. Dieser umschließt, wie aus Fig. 2 anhand der Schraffur entnehmbar ist, ein Kupplungsvolumen (KV).

Zum Torsionsschwingungsdämpfer 40 bleibt nachzutragen, dass dieser mit einer Torsionsdämpfernabe 54 über einen Abtriebsteil 52 verfügt, durch welchen er über eine Verzahnung 56 mit dem Abtrieb in drehfester Verbindung steht.

Das in Fig. 1 gezeigte Torusvolumen (TV) bildet gemeinsam mit dem in Fig. 2 dargestellten Kupplungsvolumen (KV) ein Gesamtvolumen, das während des Betriebszustandes der Kopplungsanordnung 3, also während einer Rotation des Gehäuses 5 um die Drehachse 2, durch Fluid beaufschlagt ist, wobei sich dieses Fluid unter Fliehkrafteinwirkung befindet. Im Torusraum 62 ist hierbei genügend Fluid zur Übertragung auch größerer Drehmomente enthalten. Nach Beendigung dieses Betriebszustandes wird das dem Gesamtvolumen zugrundeliegende Fluid aufgrund fehlender Drehbewegung des Gehäuses 5 zum einen über nicht gezeigte Versorgungskanäle der Kopplungsanordnung 3 aus dem Gehäuse 5 herausgeführt, zum anderen schwerkraftbedingt unterhalb der Drehachse 2 im Gehäuse 5 angesammelt. Nach einer bestimmten Zeit des Stillstands, die nachfolgend kurz als Mindeststillstandsphase bezeichnet ist, und durchaus etwa 30 bis 60 Stunden betragen kann, hat sich ein Zustand eingestellt, der in Fig. 3 dargestellt ist, indem sich das gesamte noch im Gehäuse 5 enthaltene Fluid unterhalb der Drehachse 2 angesammelt hat. Dieses vom Fluid eingenommene Volumen ist nachfolgend als Stillstandsvolumen (SV) bezeichnet.

Zurückkommend zu Fig. 5, stützen sich an der radialen Außenseite des Gehäuses 5 mit Axialabstand zueinander zwei zumindest im wesentlichen ringförmige Reduzierungselemente 70, 72 einer Volumenreduzierung 68 ab, von denen das antriebsseitige Reduzierungselement 70 sich im wesentlichen axial zwischen dem Gehäusedeckel 51 und dem Torsionsschwingungsdämpfer 40 befindet, das abtriebsseitige Reduzierungselement 72 dagegen axial zwischen dem Torsionsschwingungsdämpfer 40 und dem Turbinenrad 28 und damit dem Torusraum 62. Diese Reduzierungselemente 70, 72 können aus Metall bestehen, oder aus Kunststoff, und lediglich in den Kupplungsraum 64 eingelegt sein, oder aber mit dem Gehäuse 5 fest verbunden sein, beispielsweise durch Einkleben, Vernieten oder Verschweißen.

Ein weiteres Reduzierungselement 74 der Volumenreduzierung 68 ist an der Turbinennabe 38 des Turbinenrades 28 angeformt oder befestigt, ein nochmals anderes Reduzierungselement 76 dagegen an der Leitradnabe 34 des Leitrades 30. Die beiden letztgenannten Reduzierungselemente 74, 76 sind damit an relativ zum Gehäuse 5 drehbaren, dem Torusraum 62 zugeordneten Bauteilen 78 und 80 befestigt, wobei das Bauteil 78 durch das Leitrad 30 und das Bauteil 80 durch das Turbinenrad 28 gebildet wird.

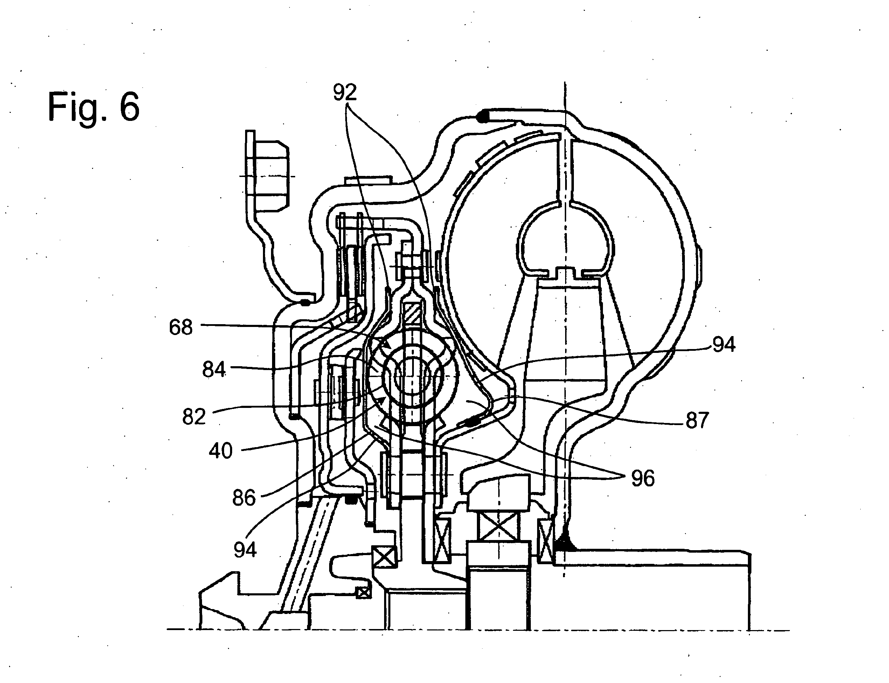

Eine weitere Möglichkeit zur Bildung eines Reduzierungselementes 84 im Kupplungsraum ist in Fig. 6 dargestellt. Der dort dargestellte Torsionsschwingungsdämpfer 40, der als weiteres zur Aufnahme eines Reduzierungselementes 84 vorgesehenes Bauteil 82 dient, verfügt axial beidseits über Abdichtungen 86, 87 in Form membranartiger Deckbleche, von denen die Abdichtung 86 unmittelbar am Torsionsschwingungsdämpfer 40 befestigt ist, die Abdichtung 87 dagegen an der Turbinennabe 38 des Turbinenrades 28. Die beiden Abdichtungen 86 und 87 bilden zusammen eine Kapselung 92 für den Torsionsschwingungsdämpfer 40, wobei ein von der Kapselung 92 umschlossener Kapselraum 96 ein Kapselraum-Volumen bildet, um welches das Kupplungsvolumen (KV) des Kupplungsraums 64 reduziert ist. Dieses Kapselraum-Volumen kann deutlich größer sein als das zur Aufnahme des Torsionsschwingungsdämpfer 40 benötigte Mindestvolumen, indem, wie aus Fig. 6 ersichtlich, die Abdichtung 87 mit Abstand zum Torsionsschwingungsdämpfer 40 angeordnet ist. Hierdurch lässt sich der Betrag des Kapselraum-Volumens problemlos beeinflussen.

Für einen vorteilhaften Betrieb des Torsionsschwingungsdämpfers 40 kann eine Schmiermittelversorgung zweckmäßig sein. Hierzu kann zumindest eine der Abdichtungen 86, 87 mit Schmierdurchgängen 94 versehen sein, die allerdings so dimensioniert sind, dass sie lediglich eine geringe Leckage von Fluid ermöglichen.

Ein weiteres, zumindest im wesentlichen ringförmiges Reduzierungselement 88 ist in Fig. 5 erkennbar, allerdings nicht im Kupplungsraum 64, sondern im Torusraum 62. Dieses Reduzierungselement 88 ist in einem Innentorusraum 90 angeordnet, und damit in einem Bereich des Torusraums 62, der für die hydrodynamische Drehmomenten-Übertragungsfähigkeit der Kopplungsanordnung 3 nicht von wesentlicher Bedeutung ist.

Der Zweck der Reduzierungselemente 70, 72, 74, 76, und 84 liegt, unabhängig von ihrer jeweiligen Positionierung innerhalb des Kupplungsraumes 64, darin, eine Verringerung des Kupplungsvolumens (KV) im Kupplungsraum 64 zu bewirken, und dadurch das Kupplungsvolumen (KV) betragsmäßig an das nach einer Mindeststillstandsphase eingestellte Stillstandsvolumen (SV) anzupassen. Diese mittels der Reduzierungselemente 70, 72 , 74, 76 und 84 der Volumenreduzierung 68 erzielbare Wirkung kann durch einen Beurteilungsfaktor K ermittelt werden, und zwar mit folgender Formel:

$$K = Stillstandsvolumen\ (SV) / Kupplungsvolumen\ (KV)$$

Bei einer Verkleinerung des Kupplungsvolumens (KV) wird zwar auch das Stillstandvolumen (SV) reduziert, jedoch nicht in dem Maße wie das Kupplungsvolumen (KV). Der Grund hierfür liegt darin, dass sich der Oberflächenspiegel 98 des Stillstandsvolumens (SV) (vgl. Fig. 3) um einen Betrag A unterhalb der Drehachse 2 einstellt, so dass der fluidfreie Teil des Kupplungsvolumens (KV) während dieses Betriebszustandes um den Betrag A über die Drehachse 2 hinausragt. Das fluidfreie Kupplungsvolumen (KV) ist demnach größer als das Stillstandsvolumen (SV). Durch die Volumenreduzierung 68 wird also der fluidfreie Teil des Kupplungsvolumens (KV) stärker verringert als das Stillstandsvolumen (SV), und damit der Beurteilungsfaktor K erhöht.

Für ein gutes Befüllungsverhalten des Gehäuses 5 bei einem Neustart des Antriebes 1 und damit der hydrodynamischen Kopplungsanordnung 3 nach einer Mindeststillstandsphase sollte der Beurteilungsfaktor K oberhalb des Wertes 0,9 liegen, mit Vorzug hierbei innerhalb eines Wertebereiches zwischen 0,9 und 1,2. Für die Anzahl sowie die Bemessung der einzelnen Reduzierungselemente 70, 72, 74, 76 und 84 der Volumenreduzierung 68 bedeutet dies, dass durch diese das für Fluid ausfüllbare Kupplungsvolumen (KV) innerhalb des Kupplungsraumes 64 derart reduziert werden sollte, dass das Stillstandsvolumen (SV) mit dem 0,9-fachen des Kupplungsvolumens (KV) nur unwesentlich kleiner als dasselbe ist, aber auch größer wie dieses sein kann, beispielsweise bis etwa zum 1,2-fachen. Zwischen diesen beiden Extremen liegt ein vorteilhafter Ausgestaltungsbereich, wonach das Stillstandsvolumen (SV) zumindest im wesentlichen gleich dem Kupplungsvolumen (KV) ist, und bis zum 1,2-fachen des Kupplungsvolumens (KV) betragen kann.

Hierbei gilt: Wenn das gewünschte Befüllungsverhalten des Gehäuses 5 nach einer Mindeststillstandsphase bereits mit einem der Reduzierungselemente 70, 72, 74, 76 oder 84 erreicht ist, benötigt die Volumenreduzierung 68 lediglich dieses eine Reduzierungselement. Ist dagegen mit nur einem Reduzierungselement 70, 72, 74, 76 oder 84 das Befüllungsverhalten des Gehäuses 5 nach einer Mindeststillstandsphase noch nicht ausreichend, so wird die Volumenreduzierung 68 mit zumindest einem weiteren Reduzierungselement 70, 72, 74, 76 oder 84 auszubilden sein. Die Wirkung der Verringerung des Kupplungsvolumens (KV) des Kupplungsraumes 64 durch die Volumenreduzierung 68 ist wie folgt:

Bei zumindest im wesentlichen an das Stillstandsvolumen (SV) angepasstem Kupplungsvolumen (KV) ist nach einer Mindeststillstandsphase bei einem Neustart von anfang an sicher gestellt, dass der Kupplungsraum 64 zumindest im wesentlichen mit Fluid versorgt werden kann, und darüber hinaus auch für den Torusraum 62 noch Fluid zur Verfügung steht, das zur Übertragung eines Drehmomentes zwischen dem Gehäuse 5 und dem Abtrieb nutzbar ist. Beginnend bei einer derartigen Ausgangssituation ist im weiteren Betriebsverlauf, ausgehend von einer hydrodynamischen Kopplungsanordnung 3 in Ausführung als Zwei-Leitungs-System, sehr rasch weiteres Fluid bei geöffneter Überbrückungskupplung 45 über die Druckkammer 48 dem hydrodynamischen Kreis 60 zuführbar, wobei aufgrund des bereits gefüllten Kupplungsraums 64 dieses weitere Fluid sehr rasch in den Torusraum 62 geführt wird, und dort für eine vollständige Wiederbefüllung des Torusvolumens (TV) sorgt. Das die erfindungsgemäße hydrodynamische Kopplungsanordnung 3 aufweisende Kraftfahrzeug kann demnach dank der Volumenreduzierung 68 im Kupplungsraum 64 auch bei einem Neustart nach einer Mindeststillstandsphase zügig beschleunigt werden.

Bezugszeichenliste

| | |
|---|---|
| 1 | Antriebsstrang |
| 2 | Drehachse |
| 3 | Kupplungsanordnung |
| 5 | Gehäuse |
| 7 | Befestigungsorgane |
| 9 | Kupplungselement |
| 11 | Antrieb |
| 13 | Brennkraftmaschine |
| 15 | Gehäusenabe |
| 17 | Getriebeanordnung |
| 20 | Pumpenbeschaufelung |
| 22 | Pumpenrad |
| 24 | Turbinenschale |
| 26 | Turbinenbeschaufelung |
| 28 | Turbinenrad |
| 30 | Leitrad |
| 32 | Leitradbeschaufelung |
| 34 | Leitradnabe |
| 36 | Freilauf |
| 38 | Turbinenradnabe |
| 40 | Torsionsschwingungsdämpfer |
| 42 | Eingangsteil |
| 44 | Lamellen |
| 45 | Überbrückungskupplung |
| 46 | Zwischenlamelle |
| 47 | Kolben |
| 48 | Druckkammer |
| 49 | Deckelnabe |
| 50 | Drehsicherung |
| 51 | Gehäusedeckel |
| 52 | Abtriebsteil |
| 54 | Torsionsdämpfernabe |
| 56 | Verzahnung |
| 60 | Hydrodynamischer Kreis |
| 62 | Torusraum |
| 64 | Kupplungsraum |
| 66 | mechanischer Übertragungskreis |
| 68 | Volumenreduzierung |
| 70, 72 | Reduzierungselemente |

| 74, 76 | Reduzierungselemente |
| 78, 80, 82 | Bauteil |
| 84 | Reduzierungselement |
| 86 | Abdichtungen |
| 88 | Reduzierungselement |
| 90 | Innentorusraum |
| 92 | Kapselung |
| 94 | Schmierdurchgänge |
| 96 | Kapselraum |
| 98 | Oberflächenspiegel |

**Patentansprüche**

1. Hydrodynamische Kopplungsanordnung zur Herstellung oder zur Aufhebung einer Wirkverbindung zwischen einem Antrieb und einem Abtrieb, versehen mit einem um eine Drehachse rotierbaren Gehäuse, in welchem wenigstens ein ein Torusvolumen (TV) bildender Torusraum mit zumindest einem-Pumpen- und einem Turbinenrad vorgesehen ist, und zumindest ein ein Kupplungsvolumen (KV) begrenzender Kupplungsraum, von welchem ein mechanischer Übertragungskreis umschlossen ist, der über eine mit einem Torsionsschwingungsdämpfer ausgebildete Überbrückungskupplung verfügt, wobei im Verlauf einer Mindeststillstandsphase des Gehäuses eine im Betriebszustand im Gehäuse verteilte Fluidbefüllung von einem wenigstens das Torusvolumen (TV) und das Kupplungsvolumen (KV) umfassenden Gesamtvolumen auf ein Stillstandsvolumen (SV) reduziert ist, das sich schwerkraftbedingt zumindest im wesentlichen unterhalb der Drehachse befindet, wobei das Gehäuse (5) mit einer innerhalb des Kupplungsraumes (64) zur Verringerung des Kupplungsvolumens (KV) gegenüber dem Stillstandsvolumen (SV) vorgesehenen Volumenreduzierung (68) versehen ist, und wobei die Volumenreduzierung (68) über wenigstens ein in den Kupplungsraum (64) ragendes Reduzierungselement (70, 72, 74, 76, 84) verfügt,
**dadurch gekennzeichnet,**
**dass** wenigstens eine Reduzierungselement (70, 72) an einem radial äußeren Bereich des Gehäuses (5) abgestützt ist.

2. Bitte einfügen den Wortlauf des Anspruchs 1 und 4 so wie oben geändert
wobei zumindest ein Reduzierungselement (76) an einem gegenüber dem Gehäuse (5) relativ drehbaren Bauteil (78) vorgesehen ist, und das Kupplungsvolumen (KV) des Kupplungsraumes (64) verringernd, in denselben ragt, und wobei das zumindest eine gegenüber dem Gehäuse (5) relativ drehbare Reduzierungselement (76) an einem dem Torusraum (62) zugeordneten Bauteil (78) vorgesehen ist,
**dadurch gekennzeichnet;**
**dass** das zumindest eine gegenüber dem Gehäuse (5) relativ drehbare Bauteil (78) durch das Leitrad (30) gebildet ist, welches an seiner dem Kupplungsraum (64) zugewandten Seite zur Aufnahme des Reduzierungselementes (76) vorgesehen ist.

3. Hydrodynamische Kopplungsanordnung nach einem der Ansprüche 1 oder 2,
**dadurch gekennzeichnet,**
**dass** ein weiteres gegenüber dem Gehäuse (5) retativ drehbares Bauteil (82) durch den Torsionsschwingungsdämpfer (40) gebildet ist, welcher über Abdichtungen (86, 87) zur Erzielung einer Kapselung (92) des Torsionsschwingungsdämpfers (40) gegenüber dem Kupplungsraum (64) verfügt, und somit als Reduzierungselement (84) wirksam ist,
und **dass** die Kapselung (92) des Torsionsschwingungsdämpfers (40) über Schmierdurchgänge (94) für im Kupplungsraum (64) enthaltenes Fluid verfügt.

4. Hydrodynamische Kopplungsanordnung nach einem der Ansprüche 1 bis 3,
**dadurch gekennzeichnet,**
**dass** die Volumenreduzierung (68) alternativ oder zusätzlich zu den Reduzierungselementen (70, 72, 74, 76, 84) über ein im Torusraum (62) vorgesehenes Reduzierungselement (88) verfügt, indem dieses innerhalb eines für die hydrodynamische Übertragung eines Drehmomentes nicht genutzten Innentorusraums (90) vorgesehen ist.

**Claims**

1. Hydrodynamic coupling arrangement for making or breaking an operative connection between a drive and an output, provided with a housing which is rotatable about an axis of rotation and in which is provided at least one toroidal space forming a toroidal volume (TV) and having at least one pump wheel and one turbine wheel, and at least one clutch space which delimits a clutch volume (KV) and which encloses a mechanical transmission circuit which has a bridging clutch designed with a torsional vibration damper, in the course of a minimum standstill phase of the housing a fluid filling, distributed in the housing in the operating state, being reduced from an overall volume, comprising at least the toroidal volume (TV) and the clutch volume (KV), to a standstill volume (SV) which is located at least essentially below the axis of rotation as a consequence of gravity, the housing (5) being provided with a volume reduction (68) provided within the clutch space (64) for decreasing the clutch volume (KV) with respect to the standstill volume (SV), and the volume reduction (68) having at least one reducing element (70, 72, 74, 76, 84) projecting into the clutch space (64), **characterized in that** at least one reducing element (70, 72) is supported on a radially outer region of the housing (5).

2. Hydrodynamic coupling arrangement for making or breaking an operative connection between a drive and an output, provided with a housing which is rotatable about an axis of rotation and in which is provided at least one toroidal space forming a toroidal volume (TV) and having at least one pump wheel and one turbine wheel, and at least one clutch space which delimits a clutch volume (KV) and which encloses a mechanical transmission circuit which has a bridging clutch designed with a torsional vibration damper, in the course of a minimum standstill phase of the housing a fluid filling, distributed in the housing in the operating state, being reduced from an overall volume, comprising at least the toroidal volume (TV) and the clutch volume (KV), to a standstill volume (SV) which is located at least essentially below the axis of rotation as a consequence of gravity, the housing (5) being provided with a volume reduction (68) provided within the clutch space (64) for decreasing the clutch volume (KV) with respect to the standstill volume (SV), and the volume reduction (68) having at least one reducing element (70, 72, 74, 76, 84) projecting into the clutch space (64), at least one reducing element (76) being provided on a component (78) rotatable in relation to the housing (5) and projecting into the clutch space (64) so as to decrease the clutch volume (KV) of the latter, and the at least one reducing element (76) rotatable in relation to the housing (5) being provided on a component (78) assigned to the toroidal space (62), **characterized in that** the at least one component (78) rotatable in relation to the housing (5) is formed by the guide wheel (30) which is provided, on its side facing the clutch space (64), for receiving the reducing element (76).

3. Hydrodynamic coupling arrangement according to either one of Claims 1 and 2, **characterized in that** a further component (82) rotatable in relation to the housing (5) is formed by the torsional vibration damper (40) which has seals (86, 87) for achieving an encapsulation (92) of the torsional vibration damper (40) with respect to the clutch space (64), and which is therefore active as a reducing element (84), and **in that** the encapsulation (92) of the torsional vibration damper (40) has lubricating passages (94) for fluid contained in the clutch space (64).

4. Hydrodynamic coupling arrangement according to one of Claims 1 to 3, **characterized in that** the volume reduction (68) has, alternatively or additionally to the reducing elements (70, 72, 74, 76, 84), a reducing element (88) provided in the toroidal space (62), **in that** this reducing element (88) is provided within an inner toroidal space (90) not used for the hydrodynamic transmission of a torque.

**Revendications**

1. Agencement d'accouplement hydrodynamique pour l'établissement ou la suppression d'une liaison fonctionnelle entre un entraînement et une prise de force, pourvu d'un boîtier pouvant tourner autour d'un axe de rotation, dans lequel est prévu au moins un espace en forme de tore formant un volume de tore (TV) avec au moins une roue de pompe et une roue de turbine, et au moins un espace d'accouplement limitant un volume d'accouplement (KV), qui entoure un cercle de transmission mécanique, qui dispose d'un accouplement de pontage réalisé avec un amortisseur des oscillations de torsion, un remplissage de fluide distribué pendant le fonctionnement dans le boîtier étant réduit au cours d'une phase d'arrêt minimum du boîtier d'un volume total comprenant au moins le volume de tore (TV) et le volume d'accouplement (KV) à un volume d'arrêt (SV), qui se trouve, du fait de la force de pesanteur, au moins essentiellement en dessous de l'axe de rotation,
le boîtier (5) étant pourvu d'une réduction de volume (68) prévue à l'intérieur de l'espace d'accouplement (64) pour réduire le volume d'accouplement (KV) par rapport au volume d'arrêt (SV),
et la réduction de volume (68) disposant d'au moins un élément de réduction (70, 72, 74, 76, 84) saillant dans l'espace d'accouplement (64),
**caractérisé en ce que**
au moins un élément de réduction (70, 72) est supporté sur une région radialement extérieure du boîtier (5).

2. Agencement d'accouplement hydrodynamique pour l'établissement ou la suppression d'une liaison fonctionnelle entre un entraînement et une prise de force, pourvu d'un boîtier pouvant tourner autour d'un axe de rotation, dans lequel est prévu au moins un espace en forme de tore formant un volume de tore (TV) avec au moins une roue de pompe et une roue de turbine, et au moins un espace d'accouplement limitant un volume d'accouplement (KV), qui entoure un cercle de transmission mécanique, qui dispose d'un accouplement de pontage réalisé avec un amortisseur des oscillations de torsion, un remplissage de fluide distribué pendant le fonctionnement dans le boîtier étant réduit au cours d'une phase d'arrêt minimum du boîtier d'un volume total comprenant au moins le volume de tore (TV) et le volume d'accouplement (KV) à un volume d'arrêt (SV), qui se trouve, du fait de la force de pesanteur, au moins essentiellement en dessous de l'axe de rotation, le boîtier (5) étant pourvu d'une réduction de volume (68) prévue à l'intérieur de l'espace d'accouplement (64) pour réduire le volume d'accouplement (KV) par rapport au volume d'arrêt (SV),
et la réduction de volume (68) disposant d'au moins un élément de réduction (70, 72, 74, 76, 84) saillant dans l'espace d'accouplement (64),
au moins un élément de réduction (76) étant prévu sur un composant (78) pouvant tourner par rapport au boîtier (5), et pénétrant dans le volume d'accouplement (KV) de l'espace d'accouplement (64) en le réduisant,
et l'au moins un élément de réduction (76) pouvant tourner par rapport au boîtier (5) étant prévu sur un composant (78) associé à l'espace en forme de tore (62),
**caractérisé en ce que**
l'au moins un composant (78) pouvant tourner par rapport au boîtier (5) est formé par la roue directrice (30) qui est prévue pour recevoir l'élément de réduction (76) sur son côté tourné vers l'espace d'accouplement (64).

3. Agencement d'accouplement hydrodynamique selon l'une quelconque des revendications 1 ou 2,
**caractérisé en ce que**
un autre composant (82) pouvant tourner par rapport au boîtier (5) est formé par l'amortisseur d'oscillations de torsion (40), qui dispose d'éléments d'étanchéité (86, 87) pour obtenir un encapsulage (92) de l'amortisseur d'oscillations de torsion (40) par rapport à l'espace d'accouplement (64), et donc agit en tant qu'élément de réduction (84),
et **en ce que** l'encapsulage (92) de l'amortisseur d'oscillations de torsion (40) dispose de passages de lubrification (94) pour du fluide contenu dans l'espace d'accouplement (64).

4. Agencement d'accouplement hydrodynamique selon l'une quelconque des revendications 1 à 3,
**caractérisé en ce que**
la réduction de volume (68) dispose, en variante ou en plus des éléments de réduction (70, 72, 74, 76, 84), d'un élément de réduction (88) prévu dans l'espace en forme de tore (62), cet élément étant prévu à l'intérieur d'un espace en forme de tore interne (90) non utilisé pour le transfert hydrodynamique d'un couple.

# Fig. 1

*Stand der Technik*

62

5

TV

Stand der Technik
# Fig. 2

64

5

KV

Stand der Technik

# Fig. 3

Fig. 4

# Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3938724 A1
- DE 2553884 A
- WO 2007054047 A2
- DE 10358902 A1